# EUROPÄISCHE PATENTSCHRIFT

(11) **EP 2 516 981 B1**
(45) Veröffentlichungstag und Bekanntmachung des Hinweises auf die Patenterteilung: **11.12.2013**
(21) Anmeldenummer: 10768787.3
(22) Anmeldetag: 22.10.2010
(51) Int. Cl.: G01M 3/20, G01M 3/22

(54) **VERFAHREN UND VORRICHTUNG ZUR LECKBESTIMMUNG**
METHOD AND DEVICE FOR DETERMINING LEAKAGE
PROCÉDÉ ET DISPOSITIF POUR LA DÉTERMINATION DES FUITES

(30) Priorität: 21.12.2009 DE 102009059824
(43) Veröffentlichungstag der Anmeldung: 31.10.2012
(73) Patentinhaber: Inficon GmbH, 50968 Köln (DE)
(72) Erfinder: GROSSE BLEY, Werner, 53125 Bonn (DE); KÜSTER, Gerhard, 51109 Köln (DE)
(74) Vertreter: von Kreisler Selting Werner
(86) Internationale Anmeldenummer: PCT/EP2010/065984
(87) Internationale Veröffentlichungsnummer: WO 2011/076459

(56) Entgegenhaltungen:
- DE-A1-102007 057 944
- US-A- 3 645 127
- US-A- 4 785 666
- US-A- 5 767 391
- US-B1- 6 314 793

## Beschreibung

Die Erfindung betrifft ein Verfahren zur Leckbestimmung an einem Gerät, welches kondensierbares Gas enthält, insbesondere Kältemittel, sowie eine entsprechende Vorrichtung zur Leckbestimmung.

Bei einer Serienfertigung von Kälteanlagen, wie beispielsweise Kühlschränken oder Klimaanlagen, ist eine in die Serienfertigung integrierte Dichtheitsprüfung bei Atmosphärendruck wünschenswert. Eine besondere Schwierigkeit besteht darin, dass extrem niedrige Konzentrationen des Kältemittels im ppb-Bereich innerhalb einer sehr kurzen Zeit von einigen 10 Sekunden festgestellt werden müssen. Dabei können andere ausgasende Kohlenwasserstoffe, z.B. von Lacken, Lösungsmitteln, Schmier- oder Reinigungsmitteln, einen störenden Untergrund erzeugen, der durch eine entsprechende selektive Messung des Kältemittels zu eliminieren ist. Ein Blasentest im Rahmen einer Tauchprüfung ist kaum möglich, da irreversible Schäden an dem zu prüfenden Gerät auftreten könnten.

Bisher gibt es keine Methode, mit der in kurzer Zeit im Linientakt einer Fertigungslinie eine komplett betriebsbereite Kälteanlage integral auf den Austritt von Kältemittel geprüft werden könnte. Man behilft sich dadurch, dass man die für Lecks bekannten Stellen wie Lötstellen, Dichtungen, Ventile u. dgl. lokal mit einem Schnüffler absucht. Dabei sind die Sorgfalt des Bedieners und seine Aufmerksamkeit extrem gefordert Siehe ebenfalls z.B. die Dokumente US 4785666 oder US 645127, die weitere Lösungen beschreiben.

Der Erfindung liegt die Aufgabe zugrunde, ein Verfahren und eine Vorrichtung zur Leckbestimmung an einem Gerät, welches kondensierbares Gas enthält, zu schaffen, so dass trotz der geringen Konzentration des zu detektierenden Gases eine sichere und schnelle Leckerkennung ermöglicht wird.

Das erfindungsgemäße Verfahren ist durch den Patentanspruch 1 definiert. Es sieht vor, dass das Umgebungsgas aus der Umgebung des Gerätes über oder durch ein Adsorbens geleitet wird, welches das kondensierbare Gas adsorbiert. Danach erfolgt das Anregen des Adsorbens zur Desorption des adsorbierten Gases. Das desorbierte Gas wird dann an einen Gassensor zur selektiven Erkennung des Gases geleitet. Erfindungsgemäß erfolgt somit eine Akkumulation des zu erkennenden Gases an dem Adsorbens. Nach Anreicherung des Adsorbens erfolgt die Anregung zur Desorption des adsorbierten Gases, beispielsweise durch Wärmestrahlung. Das angesammelte Gas wird in entsprechend erhöhter Konzentration zum Gassensor hin abgesaugt. Auf diese Weise kann mit intermittierendem Betrieb auch bei geringer Gaskonzentration ein sicheres Meßergebnis erzielt werden, das auch eine Quantifizierung erlaubt. Ein solches Meßverfahren ist im Zuge einer Fertigungslinie anwendbar, ohne den Fertigungstakt zu verlangsamen. Eine erste Selektion findet während der Adsorption statt, da das Adsorbens selektiv gebunden wird. Eine zweite Selektion erfolgt in dem Gassensor, bei dem es sich um einen selektiven Gassensor handelt, der Gase nicht nur detektieren, sondern auch analysieren kann, wie beispielsweise ein Massenspektrometer.

Bei dem erfindungsgemäßen Verfahren erfolgt zunächst eine selektive Adsorption des Kältemittels im geschnüffelten Gas über eine gewisse Zeit von beispielsweise 20 Sekunden. Hierauf folgt schlagartig eine Desorption des Gases in ein Massenspektrometer, wo ein zur Konzentrations- und Adsorptionszeit messbarer Partialdruck auf einer spezifischen Massenlinie des Kältemittels auftritt. Dieser Partialdruck ist ein Maß für die Leckrate. Alle Störgase, wie Wasserstoff oder Kohlenwasserstoffe, werden dadurch unterdrückt, dass sie auf der gemessenen Massenlinie keine Intensität haben.

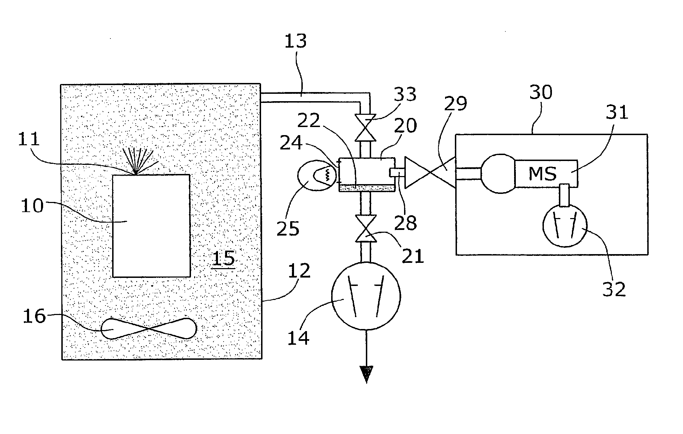

Im Folgenden wird unter Bezugnahme auf die Zeichnung ein Ausführungsbeispiel der Erfindung näher erläutert.

Die einzige Figur der Zeichnung zeigt eine Prinzipdarstellung des Ausführungsbeispiels.

Das einer Leckbestimmung zu unterziehende Gerät 10 ist ein Gerät, das einen Kältemittelkreislauf enthält. Das Kältemittel kann beispielsweise R22, R410A, R134a u. dgl. sein. Es handelt sich in jedem Fall um ein kondensierbares Gas. In der Zeichnung ist das Gerät 10 nur schematisch dargestellt. Der Kältemittelkreislauf des Gerätes 10 ist nicht im Einzelnen dargestellt. Durch ein Leck 11 des Gerätes tritt Kältemittel mit kleiner Leckrate aus.

Bei dem vorliegenden Ausführungsbeispiel befindet sich das Gerät 10 in einer Prüfkammer 12, in die es zu Prüfzwecken eingebracht ist. Die Prüfkammer 12 ist so dicht, dass in der vorgesehenen Akkumulationszeit kein nennenswerter Verlust an Gas eintritt. Es ist keine Druckdifferenz vorhanden, deshalb muss die Kammer keine Vakuumeigenschaften haben und kann sehr einfach ausgeführt sein, wodurch große Kostenvorteile entstehen. Sie ist durch eine Saugleitung 13 mit einer Förderpumpe 14 verbunden, die das Umgebungsgas 15 des Gerätes 10 aus der Prüfkammer absaugt. Die Prüfkammer 12 kann einen Ventilator 16 zur Verbesserung der Durchmischung des Umgebungsgases mit der austretenden Leckströmung enthalten.

Die Prüfkammer 12 ist nicht unbedingt erforderlich. Anstelle einer Prüfkammer kann auch vorgesehen sein, dass der Gegenstand bzw. Prüfling umhüllungsfrei der Umgebungsatmosphäre ausgesetzt ist, wobei ein Luftstrom in der Umgebungsatmosphäre an der gesamten Oberfläche des nicht umhüllten Prüflings ausschließlich durch Saugen entlangführt wird, wie es in der Patentanmeldung DE 10 2009 004 363 (Inficon) beschrieben ist.

Die Saugleitung 13 führt zu einer Adsorptionskammer 20, die über ein erstes Ventil 21 mit der Förderpumpe 14 verbunden ist. Die Adsorptionskammer weist ein abgeschlossenes Gehäuse auf, in welchem sich ein Adsorbens 22 befindet, das von dem Gas durchströmt bzw. umströmt wird, so dass ein großflächiger Kontakt entsteht. Das Adsorbens muss speziell ausgewählt werden, damit Kältemittel adsorbiert werden kann. Es handelt sich beispielsweise um Aktivkohle oder Zeolith. Die Aktivkohle kann aus Kokosnussschalen hergestellt sein. Ein derartiges Material wird unter der Bezeichnung ORBO vertrieben. Das Adsorbens bindet das verwendete Kältemittel, aber auch andere Gase. Die Selektion geschieht durch den Trennprozess im selektiven Gassensor (z.B. Massenspektrometer). Die Gasadsorption erfolgt an dem Adsorbens bei Zimmertemperatur. Eine andere Ausführungsform sieht vor, dass die Adsorptionsfläche während der Adsorptionsphase gekühlt und später zur Desorption auf Zimmertemperatur aufgeheizt wird.

Die Adsorptionskammer 20 weist ein Fenster 24 aus Quarzglas oder CaF auf. Vor diesem Fenster befindet sich ein Wärmestrahler 25 in Form einer Heizlampe. Die Strahlung des Wärmestrahlers 25 wird auf das Adsorbens gerichtet, wodurch eine Anregung des Adsorbens zur Desorption des adsorbierten Gases erfolgt. Die Desorption wird durch gesteuerte Aktivierung des Wärmestrahlers 25 ausgelöst.

Von der Adsorptionskammer 20 führt eine Leitung 28, die ein zweites Ventil 29 enthält, zu einem Gassensor 30. Der Gassensor 30 ist hier ein Massenspektrometer 31 mit einer zugehörigen Hochvakuumpumpe 32. Die Desorption des Gases erfolgt über die Leitung 28 unmittelbar in das Massenspektrometer 31 hinein.

Während der Leckbestimmung wird zunächst bei geschlossenem zweiten Ventil 29 und geöffnetem ersten Ventil 21 Umgebungsgas 15 abgesaugt. Dieser Vorgang wird über eine vorbestimmte Zeit, beispielsweise 30 Sekunden, durchgeführt. Hierbei erfolgt die Adsorption des Gases in der Adsorptionskammer 20. Danach wird das erste Ventil 21 geschlossen und das zweite Ventil 29 geöffnet. Ein drittes Ventil 33 in der Saugleitung 13 wird geschlossen. In diesem Zustand erfolgt die Desorption durch Aktivierung des Wärmestrahlers 25. Das Gas wird aus dem Adsorbens freigesetzt und gelangt unter der Wirkung der Hochvakuumpumpe 32 in das Massenspektrometer 31. In dem Gassensor 30 wird durch das Massenspektrometer 31 eine quantitative Messgröße ermittelt. Zur Kalibrierung wird der gesamte Vorgang unter den gleichen Bedingungen wie bei der späteren Prüfung für ein bekanntes Leck durchgeführt. Aus dem resultierenden Signal und der bekannten Leckrate wird ein Kalibrierfaktor durch Verhältnisbildung errechnet, der auf alle weiteren Messungen angewendet wird.

Nach Beendigung eines Prüfvorgangs folgt der nächste Prüfvorgang, bei dem zunächst Umgebungsgas 15 des Gegenstandes 10 durch die Adsorptionskammer 20 gesaugt wird, während das zweite Ventil 29 gesperrt ist.

## Patentansprüche

1. Verfahren zur Leckbestimmung an einem Gerät (10), welches kondensierbares Gas enthält, insbesondere Kältemittel, mit den Schritten:
- Ansaugen von Umgebungsgas aus der Umgebung des Gerätes 10),
**dadurch gekennzeichnet, dass** das Verfahren die weiteren Schritten enthält
- Leiten des Umgebungsgases durch ein Adsorbens (22), welches das kondensierbare Gas adsorbiert,
- Anregen des Adsorbens zur Desorption des adsorbierten Gases und
- Leiten des desorbierten Gases an einen Gassensor (30) zur selektiven Erkennung des Gases.

2. Verfahren nach Anspruch 1, wobei das Anregen des Adsorbens aus einer Aufheizung besteht.

3. Verfahren nach Anspruch 2, wobei die Aufheizung mit einem Wärmestrahler (25) erfolgt.

4. Verfahren nach einem der Ansprüche 1 bis 3, wobei das Leiten des Umgebungsgases durch das Adsorbens (22) hindurch beendet wird, bevor der Schritt des Anregens erfolgt.

5. Verfahren nach einem der Ansprüche 1 bis 4, wobei in dem Gassensor (30) eine quantitative Messgröße ermittelt wird, welche nach Kalibrierung mit einem Prüfleck eine Leckagerate angibt.

6. Verfahren nach einem der Anprüche 1 bis 5, wobei das Adsorbens (22) während des Adsorbierens gekühlt wird.

7. Verfahren nach einem der Ansprüche 1 bis 6, wobei der Gassensor (30) ein Massenspektrometer (31) aufweist, für dessen Betrieb ein Vakuum erzeugt wird, wobei die Desorption direkt in das Vakuum des Massenspektrometers hinein erfolgt.

8. Verfahren nach einem der Ansprüche 1 bis 7, wobei das Gerät (10) in einer Prüfkammer (12) positioniert wird, die das Umgebungsgas enthält.

9. Vorrichtung zur Leckbestimmung an einem Gerät (10), welches kondensierbares Gas enthält, insbesondere Kältemittel, mit einer Förderpumpe (14), welche eingerichtet ist, das Umgebungsgas aus der Umgebung des Gerätes (10) anzusaugen **dadurch gekennzeichnet, dass** die Förderpumpe (14) eingerichtet ist, das Umgebungsgas durch eine Adsorptionskammer (20) zu leiten, welche ein Adsorbens (22) enthält, einem an die Adsorptionskammer (20) angeschlossenen Gassensor (30) zum selektiven Erkennen des kondensierbaren Gases enthält und eine steuerbare Anregungsvorrichtung zum Anregen des Adsorbens zur Desorption des adsorbierten Gases enthält.

10. Vorrichtung nach Anspruch 9, **dadurch gekennzeichnet, dass** die Adsorptionskammer (20) über ein erstes Ventil (21) mit einer Förderpumpe (14) und über ein zweites Ventil (29) mit dem Gassensor (30) verbunden ist, und dass durch eine Steuereinrichtung das zweite Ventil (29) während der Adsorptionsphase sperrbar und während der Desorptionsphase öffenbar ist.

## Claims

1. A method for determining leakage on an apparatus (10) which contains condensable gas, in particular a refrigerant, the method comprising the step of:
- drawing ambient gas from the environment of the apparatus (10),
**characterized in that** the method comprises the further steps of:
- conducting the ambient gas through an adsorbent (22) which adsorbs the condensable gas,
- exciting the adsorbent for the desorption of the adsorbed gas, and
- conducting the desorbed gas to a gas sensor (30) for a selective detection of the gas.

2. The method of claim 1, wherein the excitation of the adsorbent takes the form of heating.

3. The method of claim 2, wherein the heating is effected by means of a heat radiator (25).

4. The method of one of claims 1 to 3, wherein conducting the ambient gas through the adsorbent (22) is terminated, before the excitation step is performed.

5. The method of one of claims 1 to 4, wherein a quantitative measurand is determined in the gas sensor (30), which, after calibration by means of a test leak, indicates a leakage rate.

6. The method of one of claims 1 to 5, wherein the adsorbent (22) is cooled during adsorption.

7. The method of one of claims 1 to 6, wherein the gas sensor (30) comprises a mass spectrometer (31), a vacuum being generated for the operation of the same, with the desorption being directed directly into the vacuum of the mass spectrometer.

8. The method of one of claims 1 to 7, wherein the apparatus (10) is positioned in a test chamber (12) containing the ambient gas.

9. A device for determining leakage on an apparatus (10) which contains condensable gas, in particular a refrigerant, comprising a delivery pump (14) arranged such that it draws ambient gas from the environment of the apparatus (10), **characterized in that** the delivery pump (14) is arranged to conduct the ambient gas through an adsorption chamber (20) containing an adsorbent (22), further comprising a gas sensor (30) connected to the adsorption chamber (20) for selectively detecting the condensable gas, and comprising a controllable excitation device for exciting the adsorbent for the desorption of the adsorbed gas.

10. The device of claim 9, **characterized in that** the adsorption chamber (20) is connected to the delivery pump (14) via a first valve (21) and to the gas sensor (30) via a second valve (29), and that a control means closes the second valve (29) during the adsorption phase and opens the same during the desorption phase.

## Revendications

1. Procédé de détermination de fuites sur un appareil (10) qui contient du gaz condensable, en particulier un réfrigérant, comprenant l'étape suivante :
- aspiration de gaz ambiant dans l'environnement de l'appareil (10),
**caractérisé en ce que** le procédé comprend, en outre, les étapes suivantes :
- acheminement du gaz ambiant à travers un adsorbant (22) qui adsorbe le gaz condensable,
- excitation de l'adsorbant pour la désorption du gaz adsorbé, et
- acheminement du gaz désorbé vers un capteur de gaz (30) pour la détection sélective du gaz.

2. Procédé selon la revendication 1, dans lequel l'excitation de l'adsorbant consiste en un chauffage.

3. Procédé selon la revendication 2, dans lequel le chauffage est opéré au moyen d'un radiateur thermique (25).

4. Procédé selon l'une des revendications 1 à 3, dans lequel l'acheminement du gaz ambiant au travers de l'adsorbant (22) est achevé avant la réalisation de l'étape d'excitation.

5. Procédé selon l'une des revendications 1 à 4, dans lequel est déterminée dans le capteur de gaz (30) une grandeur de mesure quantitative qui indique un taux de fuite après étalonnage à l'aide d'une fuite calibrée.

6. Procédé selon l'une des revendications 1 à 5, dans lequel l'adsorbant (22) est refroidi pendant l'adsorption.

7. Procédé selon l'une des revendications 1 à 6, dans lequel le capteur de gaz (30) présente un spectromètre de masse (31) pour le fonctionnement duquel est générée une dépression, la désorption s'effectuant directement dans le vide du spectromètre de masse.

8. Procédé selon l'une des revendications 1 à 7, dans lequel l'appareil (10) est positionné dans une chambre de test (12) contenant le gaz ambiant.

9. Dispositif pour déterminer des fuites sur un appareil (10) qui contient du gaz condensable, en particulier un réfrigérant, comprenant une pompe de refoulement (14) conçue pour aspirer du gaz ambiant de l'environnement de l'appareil (10), **caractérisé en ce que** la pompe de refoulement (14) est conçue pour acheminer le gaz ambiant à travers une chambre d'adsorption (20) contenant un adsorbant (22), et comprenant un capteur de gaz (30) raccordé à la chambre d'adsorption (20) pour la détection sélective du gaz condensable et un dispositif d'excitation commandable pour exciter l'adsorbant pour la désorption du gaz adsorbé.

10. Dispositif selon la revendication 9, **caractérisé en ce que** la chambre d'adsorption (20) est raccordée à une pompe de refoulement (14) par l'intermédiaire d'une première soupape (21) et au capteur de gaz (30) par l'intermédiaire d'un seconde soupape (29), et **en ce qu'**un dispositif de commande permet de bloquer la seconde soupape (29) pendant la phase d'adsorption et de l'ouvrir pendant la phase de désorption.
